(19) Europäisches Patentamt
European Patent Office
Office européen des brevets

(11) **EP 4 375 920 B1**

(12) **EUROPEAN PATENT SPECIFICATION**

(45) Date of publication and mention of the grant of the patent:
**15.10.2025 Bulletin 2025/42**

(21) Application number: **22306720.8**

(22) Date of filing: **22.11.2022**

(51) International Patent Classification (IPC):
**G06T 7/00** (2017.01)

(52) Cooperative Patent Classification (CPC):
**G06T 7/0008;** G06T 2207/20081; G06T 2207/20084

(54) **ANOMALY EVALUATION METHOD AND SYSTEM, ANOMALY THRESHOLD DETERMINATION METHOD, COMPUTER PROGRAM(S) AND NON-TRANSITORY COMPUTER READABLE MEDIUM**

ANOMALIEBEURTEILUNGSVERFAHREN UND -SYSTEM, ANOMALIESCHWELLENBESTIMMUNGSVERFAHREN, COMPUTERPROGRAMM(E) UND NICHTTRANSITORISCHES COMPUTERLESBARES MEDIUM

PROCÉDÉ ET SYSTÈME D'ÉVALUATION D'ANOMALIE, PROCÉDÉ DE DÉTERMINATION DE SEUIL D'ANOMALIE, PROGRAMME(S) INFORMATIQUE(S) ET SUPPORT NON TRANSITOIRE LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**29.05.2024 Bulletin 2024/22**

(73) Proprietor: **Toyota Jidosha Kabushiki Kaisha Aichi-Ken 471-8571 (JP)**

(72) Inventors:
• **MEIER, Sven**
  **1140 BRUSSELS (BE)**
• **KNAPP, Jakob**
  **1140 BRUSSELS (BE)**
• **VAN LOOCK, Mark**
  **1140 BRUSSELS (BE)**
• **ACCAD, Dimitri**
  **1140 BRUSSELS (BE)**

(74) Representative: **Cabinet Beau de Loménie 103, rue de Grenelle 75340 Paris Cedex 07 (FR)**

(56) References cited:
**WO-A1-2021/062133     US-A1- 2020 111 204**

• SAEEDI JAMAL ET AL: "Anomaly Detection for Industrial Inspection using Convolutional Autoencoder and Deep Feature-based One-class Classification :", PROCEEDINGS OF THE 17TH INTERNATIONAL JOINT CONFERENCE ON COMPUTER VISION, IMAGING AND COMPUTER GRAPHICS THEORY AND APPLICATIONS, 6 February 2022 (2022-02-06), pages 85 - 96, XP093062178, ISBN: 978-989-7585-55-5, DOI: 10.5220/0010780200003124
• GARCÍA JOEL ET AL: "Supervised and Unsupervised Neural Networks: Experimental Study for Anomaly Detection in Electrical Consumption", 3 January 2019, ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 98 - 109, ISBN: 978-3-319-10403-4, XP047499137
• SAEEDI JAMAL ET AL: "Anomaly Detection for Industrial Inspection using Convolutional Autoencoder and Deep Feature-based One-class Classification :", PROCEEDINGS OF THE 17TH INTERNATIONAL JOINT CONFERENCE ON COMPUTER VISION, IMAGING AND COMPUTER GRAPHICS THEORY AND APPLICATIONS, 6 February 2022 (2022-02-06), pages 85 - 96, XP93062178, ISBN: 978-989-7585-55-5, DOI: 10.5220/0010780200003124

**Description**

BACKGROUND OF THE INVENTION

1. Field of the Invention

The present disclosure relates to methods and systems for detecting anomalies in a scene.
For these methods and systems, it is a challenge to reliably identify, based on input data, whether a defect, or anomaly, is present in the scene.

2. Description of Related Art

A scene, in the present disclosure, refers to any portion of the real world which includes part or all of one or more objects.
For instance, the scene can be a free space which is normally free of any object. Such free space may be defined as a specific volume in a building or in a vehicle. For instance, the free space is a volume in front of a door. The challenge in this latter case may be to detect the presence of an object which could hinder the opening of the door: The anomaly is the presence of an object.
The scene can also be a part of one or more objects, or one or more objects. A challenge in this case would be to detect that the product(s) has one or more defects. The anomaly is that at least a part of the product has not been manufactured according to specifications.
Numerous methods have been developed in order to detect anomalies in a scene, based in particular on camera images acquired by cameras. However, consistently and reliably detecting anomalies is a challenging task. In particular, when the anomaly detection system comprises neural network(s), properly training this or these neural network(s) may be difficult. For instance, creating the training dataset may be difficult for some applications.
Consequently, there remains a need for systems and methods which are capable of analysing images so as to reliably identify, in these images, the pixels of these images which actually represent said surface, in particular without including any anomalies possibly present on the surface.
The following references disclose various technologies in the field of computer vision and deep learning:

[1] Wang, Zhou, et al. "Image quality assessment: from error visibility to structural similarity." IEEE transactions on image processing 13.4 (2004): 600-612.
[2] Misra, D. (2019). Mish: A Self Regularized Non-Monotonic Neural Activation Function. ArXiv, abs/1908.08681.
[3] Johnson, J., Alahi, A., & Fei-Fei, L. (2016, October). Perceptual losses for real-time style transfer and super-resolution. In European conference on computer vision (pp. 694-711). Springer, Cham.
[4] Saeedi, Jamal et al.: "Anomaly Detection for Industrial Inspection using Convolutional Autoencoder and Deep Feature-based One-class classification", Proceedings of the 17th International Joint Conference on computer vision, imaging and computer graphics theory and applications, 6 February 2022, pages 85-96, XP 93062178, DOI: 10.5220/0010780200003124, ISBN: 978-989-7585-55-5.

SUMMARY OF THE INVENTION

The methods and systems according to the present disclosure have been developed in order to overcome the limitations of the prior art.
In this purpose, the following anomaly score determination method is proposed.
This method comprises:

S20) based on a the base datum, calculating a reconstruction and a reference, the base datum representing a scene including part or all of one or more objects, the reconstruction being calculated with a reconstruction module, the reference being extracted from the base datum;
S30) calculating a Discrepancy Map representative of differences between the reconstruction and the reference;
S40) calculating a global anomaly score based on the Discrepancy Map;
the reconstruction module being configured to calculate reconstructions such that, in the absence of anomaly(ies) in a base datum, the reconstruction calculated based on the base datum strongly resembles the reference extracted from the base datum.

The method may further comprise an anomaly detection step S50 of detecting that an anomaly is present when the global anomaly score exceeds a determined anomaly threshold. In this case, an anomaly detection message may for instance be issued when an anomaly is detected.

In the above-definition, 'the reference being extracted from the base datum' means that the reference is a datum which is obtained by applying to the base datum only traditional computer vision function(s) (resizing, normalization, cropping, sub-image extraction, etc.).

In some embodiments, the scene includes a free space provided next to an object, the free space being a space normally containing no object, and at step S30, the differences include differences caused by the presence of one or more objects in said free space.

In some embodiments, the reconstruction module is configured to output a reconstruction which, when the object(s) or the part(s) of the object(s) present in the scene have no defect, is substantially identical to the reference. This method may be used in particular to control objects manufactured in an industrial process, in particular when the process includes mounting operations performed by humans.

The base datum may comprises image(s), called herein base image(s).

In this case, in some embodiments, the reconstruction is calculated using a computer-implemented generative module configured, in order to calculate the reconstruction, to encode the Base Datum as a latent feature having a smaller resolution than the base image(s), and to calculate the reconstruction based on the latent feature. The generative module may be for instance implemented as a neural network.

In some embodiments, the Discrepancy Map calculated at step S30 comprises at least one of an Absolute Difference Map and an SSIM Map, wherein the Absolute Difference Map and the SSIM Map comprise respectively, for each pixel (i,j), the values:

$$ADM(i,j) = |\, Rec(i,j) - Ref(i,j) \,|$$

and

$$SSIM(Rec,Ref)(i,j) = SSIM(Rec(i,j),\ Ref(i,j))$$

where Rec(i,j) and Ref(i,j) are the values of pixel (i,j) respectively of the Reconstruction Rec and of Reference Ref, and SSIM is the Structural Similarity Metric.

Various methods may be used to calculate the global anomaly score based on the Discrepancy Map.

For instance, in examples not claimed per se, the global anomaly score can be calculated based on a mean value of the values of the pixels in the Discrepancy Map.

According to the invention, the global anomaly score is calculated based on a value of a pixel of Discrepancy Map which corresponds to a predetermined quantile of the Discrepancy Map. In particular, step S40 comprises:

> S42) calculating pixel value(s) at predetermined quantile(s) in map(s) of the Discrepancy Map;
> S44) calculating a value of the Anomaly Score based on said calculated pixel value(s) at said predetermined quantile(s).

In some embodiments, step S20 of calculating the reconstruction and the reference comprises:

> S22) by passing the base datum through a Generative Module, calculating a primary reconstruction based on the base datum;
> S24) applying a first post-processing to the primary reconstruction to yield the reconstruction, wherein the first post-processing includes at least one of a blurring operation and a masking operation.

In some embodiments, step S20 of calculating the reconstruction and the reference comprises a step S26:
S26) applying a second post-processing on the Base Datum to yield the Reference, wherein the second post-processing includes at least one of a blurring operation and a masking operation.

In some embodiments, the anomaly score determination method comprises a step S10 of acquiring raw data, and applying a masking operation on the raw data to obtain the base datum.

In some embodiments, the anomaly score determination method further comprises an anomaly detection step S50 of detecting that an anomaly is present when the global anomaly score exceeds an anomaly threshold.

In this case, in most embodiments an action is triggered when an anomaly is detected, for instance issuing a message, lighting on an alert light, emitting an alarm sound, 'etc.

In these embodiments, at least the following methods may be used to determine an appropriate value for the anomaly threshold.

In some examples, the anomaly threshold is determined using a training dataset which only contains defect-free images (that is, images which include no defect).

In that case, the anomaly threshold determination method may comprise the steps of:

A1) performing steps S20 S30 and S40, based on base data successively retrieved from a first dataset of defect-free base data, to obtain a first set of calculated values of the global anomaly score;
B) determining the anomaly threshold based on said first set of calculated values of the global anomaly score, or based on a distribution thereof (in particular, only based on these data).

In some other examples by contrast, the anomaly threshold is determined using a training dataset which contains a first set of defect-free images and a second set of defect-showing images. In that case, the anomaly threshold determination method may comprise the steps of:

A1) performing steps S20, S30 and S40, based on base data successively retrieved from a first dataset of defect-free base data, to obtain a first set of calculated values of the global anomaly score;
A2) performing steps S20, S30 and S40, based on base data successively retrieved from a second dataset of defect-showing base data, to obtain a second set of calculated values of the global anomaly threshold;
B) determining the anomaly threshold based on difference(s) between said first set of calculated values and said second set of calculated values, or based on differences between a distribution of said first set of calculated values and a distribution of said second set of calculated values.

In some examples, the anomaly threshold is determined using a training dataset which contains a first set of defect-free images and a second set of defect-showing images, and further using a ROC curve. In that case, the anomaly threshold determination method may comprise the steps of:

A1) performing steps S20, S30 and S40, based on base data successively retrieved from a first dataset of defect-free base data, to obtain a first set of calculated values of the global anomaly score;
A2) performing steps S20, S30 and S40, based on base data successively retrieved from a second dataset of defect-showing base data, to obtain a second set of calculated values of the global anomaly score;
C) based on the values of the first set and the second set of calculated values relative to the determined threshold, establishing a ROC curve showing a performance for detecting anomalies of the anomaly score determination method, as a function of the anomaly threshold; and
D) determining the anomaly threshold based on the ROC curve.

The methods and systems according to the present disclosure make it possible to detect that an anomaly has occurred and to immediately take appropriate action (for instance: trigger an alarm, stop working, etc.) when an anomaly is detected. Early detection of anomalies enables to increase the quality level, in particular while manufacturing industrial parts.

The methods and systems according to the present disclosure can be used in many applications.

For instance, anomaly detection according to the present disclosure may be performed to perform on-line/live part inspection, with feedback to the worker; on vehicles, to detect when the doors of the vehicle can be closed or opened; to detect the presence of obstructions in an area, by checking for anomalies in the area; to find lost items and to check the interior and exterior of vehicles, in particular shared/rental vehicles.

Advantageously, the model needed to detect anomalies according to the present disclosure can be trained reasonably simply, since only one type of data is needed for training: The system can be efficiently trained, and can exhibit good generalization capabilities, even if the training data do not include all types of anomalies. This makes the system safer to deploy, since most unknown conditions, by design, may be handled.

In addition, since only one type of label is used in the ground truth data of the training dataset, the training dataset is fairly simple to create.

In contrast with many inspection methods, in the anomaly score determination method of the present disclosure, the knowledge of normal situations is actually embedded in a reconstruction module used to predict a reconstruction.

In the present disclosure, the following notations or conventions are used:

The word 'term', even in the singular form, may refer to a sum of a plurality of terms.

An image is a tensor having three dimensions or more, in which two dimensions are referred to generally as the width and height of the image, while the other dimension(s) are called the channel(s) of the image.

A map is a calculated image.

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

The following explanations in some cases refer to an 'image' rather than a 'base datum', because in the embodiments presented herein, the base data are images. However, it should be understood that the systems and methods presented herein are applicable to any type of base datum.

In particular implementations, the proposed anomaly score determination method is determined by computer program instructions.

Accordingly, another purpose the present disclosure is to propose one or more computer program(s) comprising instructions which, when the instructions are executed by one or more processor(s), cause the one or more processor(s) to carry out the steps of any one of the anomaly score determination methods and the anomaly threshold determination methods presented above, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the above-mentioned one or more computer program(s) stored thereon.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a system comprising a computer-readable medium as defined above, and one or more processors configured to execute the one or more computer program(s) stored on the computer-readable medium.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

Fig. 1 is a schematic view in perspective of a production line, equipped with an anomaly score determination system in accordance with the present disclosure;

Fig. 2 is a schematic view in perspective of an autonomous shuttle comprising an anomaly score determination system in accordance with the present disclosure;

Fig. 3 is a schematic view of the computer and the camera of an anomaly score determination system according to the present disclosure;

Fig. 4 is a block diagram of the flow of data through an anomaly score determination system according to the present disclosure;

Figs. 5A and 5B are block diagram showing data processed by the anomaly score determination system represented on Fig.4;

Fig. 6 is a block diagram showing the steps of an anomaly score determination method in accordance with the present disclosure;

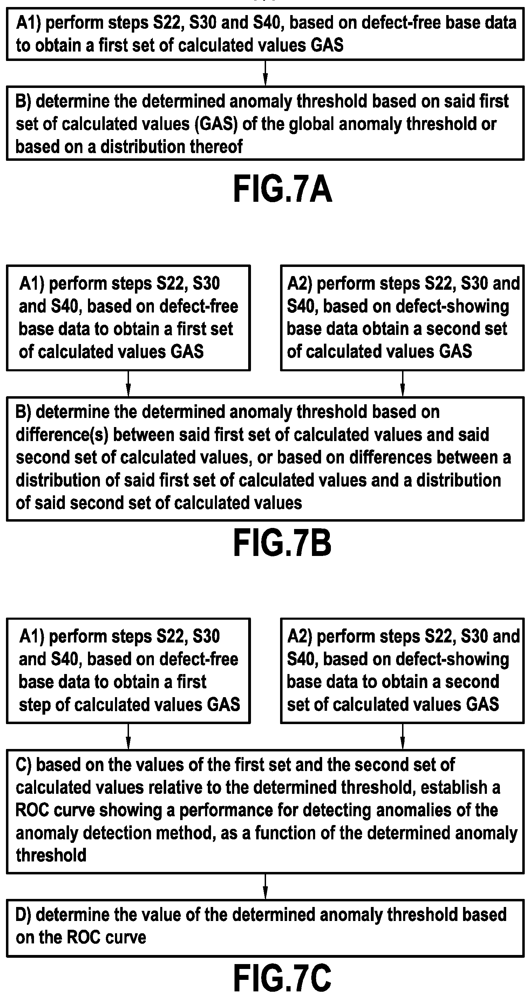

Figs. 7A, 7B and 7C are block diagrams showing the steps of anomaly threshold determination methods in accordance with the present disclosure.

DETAILED DESCRIPTION OF EMBODIMENTS

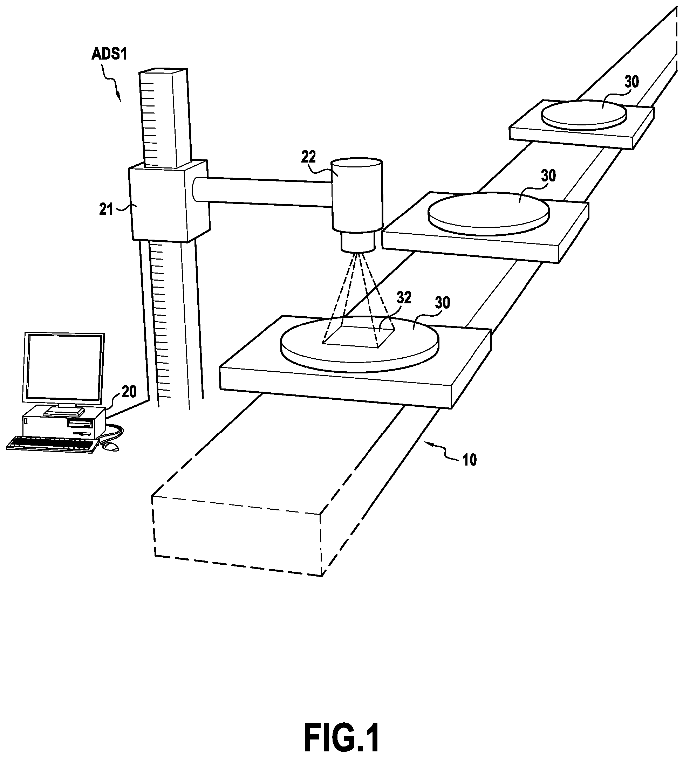

Anomaly score determination methods and systems, and training methods and systems for training such surface identification systems which constitute exemplary embodiments of the present disclosure are now going to be presented in relation with figures 1-6. Wherever possible, the same reference signs will be used throughout the figures to refer to the same or like parts or components.

First, two embodiments of anomaly score determination systems ADS (called respectively ADS1 and ADS2) according to the present disclosure will be presented.

The first anomaly score determination system ADS1, shown on Fig.1, is a control system used to detect anomalies which may occur on parts produced in an industrial manufacturing process.

This anomaly score determination system ADS1 is used to validate by a visual inspection, based on images acquired by a camera, that a just produced manufactured part does not have any defect.

While this first exemplary embodiment is related to manufacturing, the claimed anomaly score determination methods and systems may of course be implemented for anomaly detection on any objects, in particular any part or assembly produced in an industrial manufacturing process, or more broadly for anomaly detection on any objects involved, for instance used, in an industrial process, as it will be seen for instance with the second embodiment.

The anomaly score determination system ADS1 is positioned along a conveyor belt 10 which transports newly manufactured parts 30. Each part 30 has the shape of a disc and has a central area 32, which in some cases may exhibit some defects.

While in this embodiment, the part 30 which is checked is positioned and transported by an automatic positioning system, the present invention can also be implemented in situations in which parts are moved or mounted by humans.

The anomaly score determination system ADS1 comprises a control and processing means 20, a stand 21 and a digital camera 22, mounted on stand 21.

The camera 22 is a digital camera equipped with a CMOS or CCD receiver, which can be black and white or color. The camera 22 is configured to acquire an image of the central area 32 of the upper surface of parts 30 positioned in front of stand 21.

The camera 22 is configured to acquire the images from a predetermined and relatively constant point of view relative to the scene in which the defects are to be detected. As it will be explained below, some tolerance can be accepted regarding the position of the camera relative to the scene, the lighting conditions, the environment etc.

The control and processing means 20 is implemented in a computer, also referenced 20. The computer 20 is connected to the conveyor belt 10 and is capable of controlling in a coordinated manner the displacements of the conveyor belt 10 and of the camera 22. In particular, computer 24 is configured to actuate the conveyor belt by successive stop and go sequences. The images are acquired by camera 22 during a period in which the conveyor belt is stopped, and while a part 30 is stopped in front of stand 21, below camera 22.

The control and processing means 20 is configured to control camera 22 to acquire images of the upper surface 32 of parts 30, and to process the acquired images so as to detect anomalies, by implementing one of the methods presented herein.

When an anomaly is detected on a part 30, the anomaly score determination system ADS1 transmits an alert signal, including all the relevant information relative to the part 30 and anomaly detected thereon to the central control system of the manufacturing line, so that the appropriate corrective action be taken.

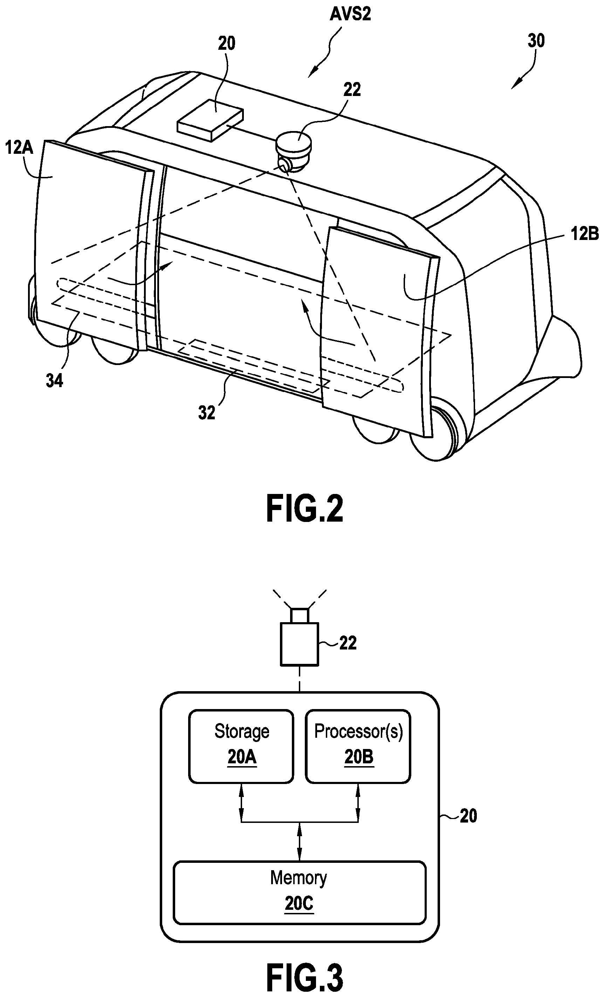

The second exemplary score determination anomaly system, ADS2, is shown on Fig.2. This ADS is a control system mounted in an autonomous shuttle, used (1) to detect whether the doors can automatically close safely, and (2) check whether some object has been forgotten by a passenger leaving the shuttle.

The second anomaly score determination system ADS2 is a control system used to detect two types of anomalies, or abnormal situations, which may occur aboard an autonomous shuttle.

A first function of the anomaly score determination system ADS2 is to ensure the safe operation, more specifically, the safe closing of doors 12A,12B of the shuttle.

The autonomous shuttle indeed is equipped with a pair of sliding doors 12A,12B. After passengers have boarded the shuttle, doors 12A,12B close before the shuttle departs (arrows on Fig.2).

In order to prevent any problem, a few seconds before the timing at which doors 12A,12B are scheduled to close, the central operation system of the shuttle transmits a detection request to the anomaly score determination system ADS2.

Upon reception of this request, ADS2 detects whether the volume or space into which doors 12A,12B move when they close, and which is occupied by doors 12A,12B in their closed position, is free, that is, does not contain any foreign matter (forgotten object, packaging, newspapers, etc.).

This verification is performed by checking the presence of foreign objects on surface 32, which is the surface of the floor of the shuttle which extends under doors 12A, 12B when they are in their closed position.

To perform this task, the anomaly score determination system ADS2 comprises a control and processing means 20 and a digital camera 22, mounted on the ceiling of the shuttle.

Camera 22 is configured to acquire images covering surface 32.

The control and processing means 20 is configured to control camera 22 to acquire images of the surface 32, and to process the acquired images so as to detect the presence of any foreign object on this surface, by implementing one of the methods presented herein.

If a foreign object is detected on that surface, a message is transmitted to the operation system of the shuttle, whereby doors 12A,12B are not closed, and appropriate action is taken.

Otherwise, doors 12A,12B can be safely closed.

A second function of the anomaly score determination system ADS2 is to detect the presence of forgotten objects, forgotten by passengers of the shuttle upon leaving the shuttle.

In order to detect such objects, camera 22 is mounted with a fish-eye lens, specifically configured to acquire images covering the whole surface 34 of the floor of the shuttle (In the shuttle, passengers travel in upright standing position, holding not-shown handles).

The control and processing means 20 is configured, in response to detection requests transmitted by the operation system, to control camera 22 to acquire images of surface 32 of the floor of the ceiling and on this basis, to detect if any object has been forgotten by passenger(s) having left the shuttle, by implementing one of the methods presented herein.

In any such object is identified, appropriate action is taken.

The functions of the anomaly score determination system ADS are implemented on computer 20. Computer 20 comprises a non-transitory storage medium 21 and one or more processor(s) 22 (Fig.3). The one or more processors 22 are intended to be representative of the presence of any one or more processors or processing devices, of any of a variety of forms. In addition, although computer 20 is represented on Figs.1-3 in a single housing, it may be a distributed calculation system, comprising a plurality of processors, possibly physically arranged on different locations. For instance, part of processors 22 may be part of a remote server.

Camera 20 can be any type of digital camera or more generally, high-resolution light sensitive transducer, capable of acquiring views of an object. The images acquired by camera 22 are transmitted to computer 20.

A computer program $P_{AD}$ comprising instructions which, when they are executed by the processor(s) 22, cause these processor(s) to carry out the steps of an anomaly score determination method used to detect anomalies by implementing the anomaly score determination methods disclosed herein, is stored in storage medium 21.

A computer program $P_{ADT}$ comprising instructions which, when they are executed by the processor(s) 22, cause these processor(s) to carry out the steps of an anomaly threshold determination method as disclosed herein is also stored in storage medium 21.

The programs $P_{AD}$ and $P_{ADT}$ and the storage media 21 are examples respectively of computer programs and a computer-readable recording medium according to the present disclosure.

The memory 21 of computer 20 constitutes a non-volatile recording medium according to the present disclosure, readable by the one or more processor(s) 22 and on which the programs $P_{AD}$ and $P_{ADT}$ are recorded.

< Functional architecture >

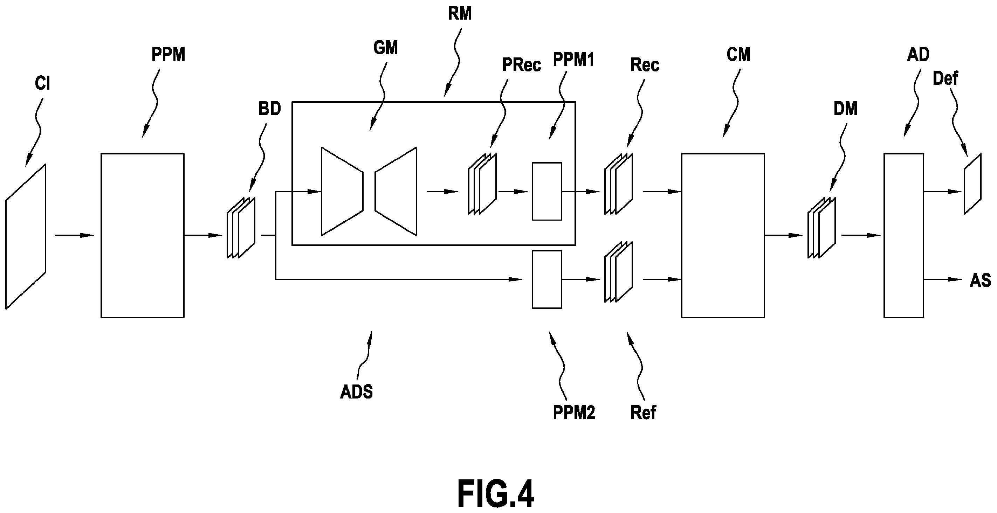

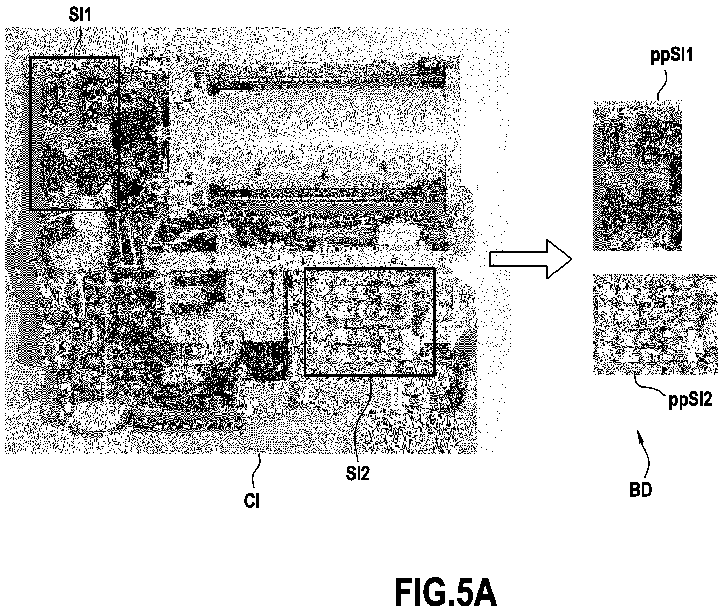

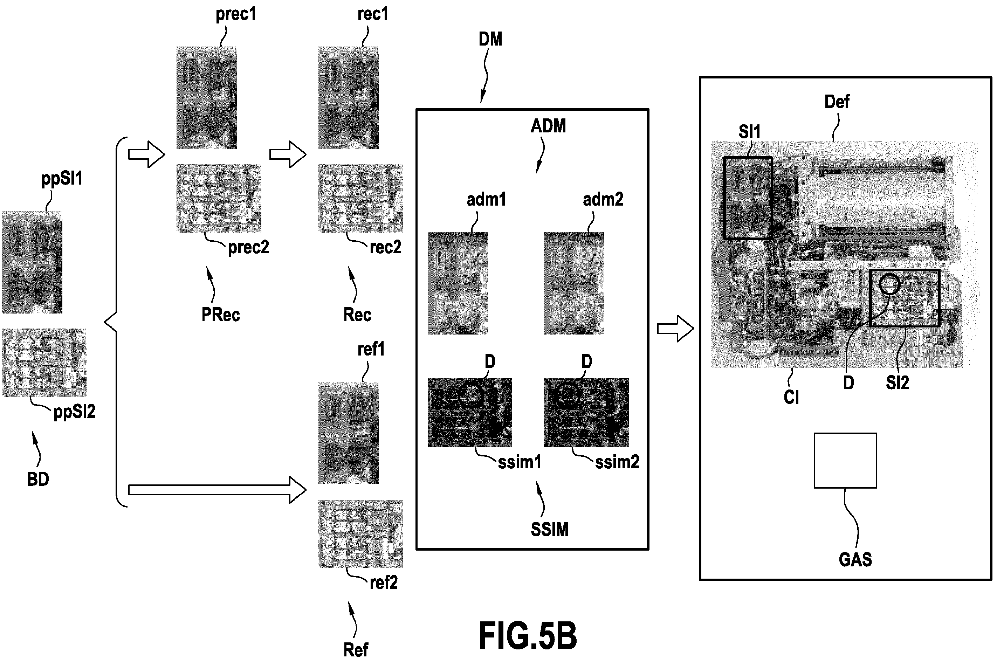

An exemplary functional architecture which can be used to implement anomaly score determination systems according to the present disclosure, for instance the above described systems ADS is now going to be presented in relation with Figs.4, 5A and 5B.

The anomaly score determination system ADS mainly comprises a pre-processing Module PPM, a Reconstruction Module RM, a Comparison Module CM and an Anomaly score Determination module AD. The Reconstruction Module RM normally comprises a Generative Module GM, and may also comprise one or two additional post-processing modules, in the present case the modules PPM1 and PPM2.

The pre-processing module PPM is a functional unit configured to input raw data acquired from sensor(s). For instance, in the exemplary embodiments presented above, raw data inputted by the pre-processing module PPM is composed of camera image(s) CI acquired from cameras. These image(s) can be any type of image(s), monochrome, RGB, etc. However a raw datum may be (or comprise) any type of data, e.g. 3D pointclouds acquired by lidars, etc. A raw data may comprise different types of data (e.g. images and 3D pointclouds), combined together.

The pre-processing module PPM is configured to perform some preliminary operation(s) on an acquired raw datum (e.g. cropping, resizing, thresholding, normalization, etc.) in order to obtain a base datum BD, which is adapted to undergo the following steps of the anomaly score determination method.

The raw datum and the pre-processing module PPM should be such that the base datum BD represents a scene including part or all of one or more objects.

In this context, an anomaly refers to any configuration of the scene which is abnormal. Accordingly, an anomaly may be for instance the presence of an object in a region of the scene which should normally be empty; an anomaly may also be a defect of an object present in the scene.

The pre-processing module PPM may be configured to perform a preliminary masking operation on the acquired raw datum, to eliminate part(s) of the raw datum for which it is known in advance that said part(s) cannot contribute to identify anomalies.

As an example of pre-processing, in the first embodiment presented herein (Fig.1), based on the raw datum, the pre-processing module PPM extracts sub-image(s) SI by cropping the inputted camera image(s) CI; these sub-image(s) SI correspond to different regions of interest in the inputted image(s) CI, which correspond to specific regions of upper surface 32 of part 30 on which detects may occur.

In addition, as mentioned above, optionally a binary mask may further be applied to the sub-image(s) SI to ignore irrelevant parts of these sub-image(s).

In some embodiments, if symmetries are known beforehand (for instance a symmetry relative to a point, a plane; axisymmetries; etc.), the sub-images may be extracted taking into account these symmetry(ies). In these cases, the pre-processing module may apply appropriate operators to transform some sub-image(s) into transformed sub-image(s) which correspond to other sub-image(s), said other sub-image(s) being expected to be symmetric with respect to the non-transformed considered sub-image(s).

The Reconstruction Module RM is a model which, for base data BD which comprise no anomaly(ies), generates or reconstructs data which resemble as much as possible to the initial base data. A reconstructed datum outputted by the Reconstruction module RM is called a reconstruction Rec.

In some embodiments, as in the embodiments presented herein, the reconstruction module comprises a generative model GM which, based on a base datum BD which comprises no anomaly(ies), generates or reconstructs a primary reconstruction PRec, which is a datum which resembles as much as possible to that base datum.

In these embodiments, the reconstruction model RM may further comprise a first post-processing module PPM1 which, based on the primary reconstruction PRec, generates or reconstructs the reconstruction Rec.

The generative module GM can be for instance an auto-encoder (a deterministic, not a variational auto-encoder). The function of an auto-encoder is to reconstruct the inputted data. The auto-encoder in this purpose is configured with an encoder and a decoder. The encoder projects the inputted data into a lower-dimensional space, called the latent space, which forms a bottleneck. The dimension of the latent space is smaller than that of the inputted data prevents the auto-encoder from simply copying the input data, and forces the encoder to extract the most meaningful features in the latent space, to facilitate reconstruction of the inputted data by the decoder. This arrangement forces the generative module to encode the information in the latent feature in the most efficient way.

The auto-encoder preferably does not include skip connection(s) between its encoder and its decoder (skipping the bottleneck) as found for instance in a U-net.

Preferably, the generative model GM comprises exactly two convolutional layers (due to memory restrictions, for instance, for embedded applications).

In the present exemplary embodiment, the generative model GM is an auto-encoder AE comprising in series:

- 2 convolution layer groups, each layer group consisting of a 2D convolution layer, a Relu layer and a Maxpool layer
- A dropout layer
- A flatten layer
- A batchnorm layer
- 2 fully connected layer unit, consisting of a Linear activation layer, a Batchnorm layer, a Relu layer
- An unflatten layer
- 1 deconvolution layer group, consisting of a 2D convolution layer, an upsampling layer, a Relu layer
- A dropout layer
- 1 deconvolution layer group
- A convolution layer
- A batchnorm layer
- A Relu layer
- A Convolution layer
- A Sigmoid activation layer.

In the auto-encoder, each Relu layer may be substituted by a Mish layer, which performs a 'Mish' activation function (defined by the equation $f(x)=x \tanh(\text{softplus}(x))$. The definition of the Mish function can be found in Ref.[2]). This provides a faster convergence during training, and often better results.

In the first embodiment presented above, the input (the base datum BD), as well as the primary reconstruction, consists in three concatenated sub-images SI, each having a resolution of 256x256 pixels. Conversely, the latent feature at the bottleneck of the generative model GM has a resolution of 64x64 pixels, but spread on 16 channels.

Based on the primary reconstruction PRec outputted by the generative model GM, the first post-processing module PPM1 performs an (optional) step S24, described below.

The first post-processing module PPM1 is a functional unit configured to perform some operation(s) (e.g. cropping, resizing, thresholding, normalization, etc.) on the Primary Reconstruction PRec in order to obtain a reconstruction Rec adapted to the anomaly score determination step S40 of the anomaly score determination method.

The anomaly score determination system ADS may further comprise an additional post-processing module, the second post-processing module PPM2 to perform an (optional) step S26, described below.

The second post-processing module PPM2 is a functional unit configured to perform some operation(s) (e.g. cropping, resizing, thresholding, normalization, etc.) on the base datum BD in order to obtain a reference Ref adapted to the anomaly score determination step S40 of the anomaly score determination method.

In the present embodiment, both post-processing modules PPM1 and PPM2 are modules configured to perform a blurring operation respectively on the Primary Reconstruction PRec and on the Base Datum.

The Comparison Module CM is a functional unit configured to calculate a Discrepancy Map DM showing the difference(s) between the Reconstruction Rec and the Reference Ref.

The Reconstruction and the Reference normally have the same format.

Different methods can be used to calculate the difference(s) between the Reconstruction and the Reference.

For instance, when the Reconstruction and the Reference comprise image(s), the Discrepancy Map DM may comprise image(s) comprising per-pixel differences between the image(s) of the Reconstruction and the corresponding image(s) of the Reference.

The Discrepancy Map DM may be based on various metric(s) to assess the differences between the Reconstruction and the Reference.

For instance, in some embodiments, the differences between the Reconstruction and the Reference are calculated by evaluating a per-pixel Structural Similarity (SSIM) between the Reconstruction and the Reference (The structural similarity function is defined for instance by Ref.[1]).

For instance in the present embodiment, based on the Reconstruction and the Reference, the Discrepancy Map DM outputted by the Comparison Module CM comprises two maps: An Absolute Difference Map ADM and an SSIM Map SSIM. These maps ADM and SSIM comprise respectively, for each pixel (i,j), the values:

$$ADM(i,j) = |\, Rec(i,j) - Ref(i,j)\, |$$

and

$$SSIM(Rec,Ref)(i,j) = SSIM(Rec(i,j),\ Ref(i,j))$$

where $|x|$ is the absolute value of a variable $x$, Rec(i,j) and Ref(i,j) are the values of pixel (i,j) respectively of the Reconstruction Rec and of Reference Ref, and SSIM is the Structural Similarity Metric.

Preferably, the SSIM modification lies setting beta=0 to avoid contrast sensitivity.

The two calculated maps ADM and SSIM are used in combination to evaluate the presence and the position of defect(s), using the Anomaly Score determination module AD.

The Anomaly Score determination module AD is a functional unit positioned downstream the comparison module CM and configured to input the discrepancy map DM and, on this basis, to output a Global Anomaly Score GAS and optionally a Defect map Def.

In the present embodiment, the Global Anomaly Score GAS calculation is based on two defect indicators, the Absolute Difference indicator qADM and the SSIM indicator qSSIM.

Each one of these defect indicators qADM and qSSIM is calculated as the pixel value for a pixel which represents a predetermined quantile (which means a predetermined percentage; for instance, 99%) of the pixels, respectively in the Absolute Difference map ADM and in the SSIM map SSIM. This pixel is a pixel whose value is the highest value such that the percentage or ratio of pixels whose value does not exceed that value is less than or equal to that predetermined percentage.

In other embodiments, in which the base datum is not an image, but for instance a pointcloud (a set of 3D point coordinates), a defect indicator is calculated as a value of a point which represents a predetermined quantile of the whole set of points.

Indeed, the values of defect indicators such as indicators qADM and qSSIM have been identified as good indicators of the presence of defect(s) or anomaly(ies) in the initial image.

Finally, to obtain a single indicator taking into account these two defect indicators, the Global Anomaly Score GAS is then calculated by summating the weighted values qADM and qSSIM:

$$GAS = w\_adm * qADM + w\_ssim * qSSIM$$

where w_adm and w_ssim are two predetermined coefficients.

The value GAS represents the global anomaly score of the considered Base Datum BD, that is, an estimation of a probability for the base datum BD to represent a scene in which some anomaly(ies) occurred.

In the present embodiment, the Anomaly Score determination module AD is further configured, if the Anomaly Score GAS exceeds a determined anomaly threshold (or, in some embodiments, regardless the value of the Global Anomaly Score GAS), to calculate a Defect map Def.

The Defect map Def is a single map which combines the information of the maps calculated by the comparison module CM into a single map. The Def map may be calculated as a map for which each pixel has a value representative of a local (per-pixel) anomaly score AS calculated as:

$$Def(i,j) = AS(i,j) = w\_adm\ ADM(i,j) + w\_ssim * SSIM(i,j)$$

where Def(i,j), ADM(i,j) and SSIM(i,j) are the values of pixel (i,j) respectively in the defect map, the Absolute Difference map and the SSIM map.

The defect map Def may be preferably a color-coded difference image (a heatmap).

In some cases, the Def map may be then transformed into a binary mask, for instance by applying a threshold function to the Def map: The values Def(i,j) of the pixels of the Def map may be set to 1 if their value is above the anomaly threshold, and to 0 otherwise.

In some cases, as shown on Fig.5B, a circle D (or some other sign) may be overlayed over points where the value Def(i,j) of the pixels of the Def map reaches a maximum.

< Anomaly threshold determination >

Several strategies can be used to determine the anomaly threshold used by the Anomaly Score determination Module ADM to calculate the Def map, depending on whether or not the training dataset used to train the anomaly detection system ADS contains or not defect-showing samples (in the present embodiment: images), that is, samples (e.g. images) which show one or more defect(s).

In the following, the explanation is given in the case where the base data are images, but of course the methods presented below can be transposed to base data of any type:

a) Anomaly threshold determination with a training dataset containing only defect-free images

In this case, the anomaly threshold is determined as follows:
Beforehand, a first dataset of defect-free base data (or images) is constituted.

Then, the following operations are realized:

A1) Steps S20, S30 and S40 are performed based on images successively retrieved from that dataset of defect-free base data. A set (a first set) of calculated values GAS of the global anomaly threshold is obtained.
B) Then, the 'determined anomaly threshold' is determined, based on said first set of calculated values (GAS) of the global anomaly threshold, or based on a distribution thereof.

In this case, the anomaly threshold can be defined for instance by adding a margin (for instance, a fixed or a proportional margin) to the global anomaly scores GAS of the first set of calculated values GAS.

As an alternative, since the global anomaly scores GAS of that first set of calculated values GAS define a distribution, features of that distribution can also be used to calculate the determined anomaly threshold. For instance, the determined anomaly threshold can be calculated based on mean value(s) and standard deviation(s) of the distribution of the global anomaly scores successively calculated during the training of the Anomaly Detection System ADS. Specifically, the anomaly threshold may be set equal to the sum of the mean value of that distribution and of a multiple (with possibly a non-integer coefficient) of its standard deviation.

b) Anomaly threshold determination with a training dataset containing a first set of defect-free images and a second set of defect-showing images

In this case, the anomaly threshold is determined as follows:
Beforehand, a first dataset of defect-free base data (or images) and a second dataset of defect-showing base data (or images) are constituted.

In the images of the second dataset, the defects can be real, that is, they can represent defect(s) shown by these images as initially captured by the camera. However, advantageously the defect-showing images can be synthetic images, in which defect(s) are overlayed in initially defect-free camera images.

Then, the following operations are realized:

A1) Steps S20, S30 and S40 are performed based on base data successively retrieved from the first dataset of defect-free base data, whereby a first set of calculated values (GAS) of the global anomaly threshold is obtained.
A2) Steps S20, S30 and S40 are performed, based on base data successively retrieved from a second dataset of defect-showing base data, whereby a second set of calculated values (GAS) of the global anomaly threshold is obtained.

B) Then, the determined anomaly threshold is determined.

The determined anomaly threshold can be determined based on difference(s) between said first set of calculated values and said second set of calculated values, or based on differences between a distribution of said first set of calculated values and a distribution of said second set of calculated values.

If there is no or very low overlap between the distribution of the global anomaly scores calculated for the defect-free images and the distribution of global anomaly scores calculated for the defect-showing images, it is concluded that the Generative Model has been successfully trained, and is fit for deployment. The value of the anomaly threshold is therefore chosen so as to separate these two distributions. In the other case, the poorly trained Generative Model GM has to be deleted, or has to be retrained before deployment.

c) Anomaly threshold determination, using a training dataset which contains a first set of defect-free images and a second set of defect-showing images, and further using a ROC curve

An alternative method to determine the determined anomaly threshold consists in using a ROC curve. A ROC curve or Receiver Operating Characteristic curve is a well-known graphical plot used to illustrate the diagnostic ability of a binary classifier system as its discrimination threshold is varied.

In this case, beforehand, the above-mentioned first and second datasets, comprising respectively defect-free- and defect-showing samples, are prepared.

Then, the following operations are performed:

(A1) Then, steps S20, S30 and S40 are performed, based on base data successively retrieved from the first dataset of defect-free base data, to obtain a first set of calculated values (GAS) of the global anomaly threshold.

(A2) Steps S20, S30 and S40 are also performed based on base data successively retrieved from the second dataset of defect-showing base data, to obtain a second set of calculated values (GAS) of the global anomaly threshold.

(C) Then, based on the values of the first set and the second set of calculated values relative to the determined threshold, a ROC curve is established. In order to show the efficiency of the anomaly detection method, this ROC curve is drawn for the whole dataset (i.e., both the defect-free images and the defect-showing images). This ROC curve is calculated based on the calculated global anomaly scores, as a function of the to-be-determined anomaly threshold. This ROC curve shows a performance for detecting anomalies of the anomaly detection method, as a function of the determined anomaly threshold, and gives a visual representation of the expected performance of the method, for the images of the first and second datasets.

(D) Finally, the value of the to-be-determined anomaly threshold is determined, based on the ROC curve. Normally, the selected value is the value of a maximum of the ROC curve.

The value of the anomaly threshold is normally chosen so that the anomaly detection method yields appropriate rates of false positive anomaly detections and false negative anomaly detections, these rates being set to be compatible with the requirements for the anomaly detection method.

< Inference >

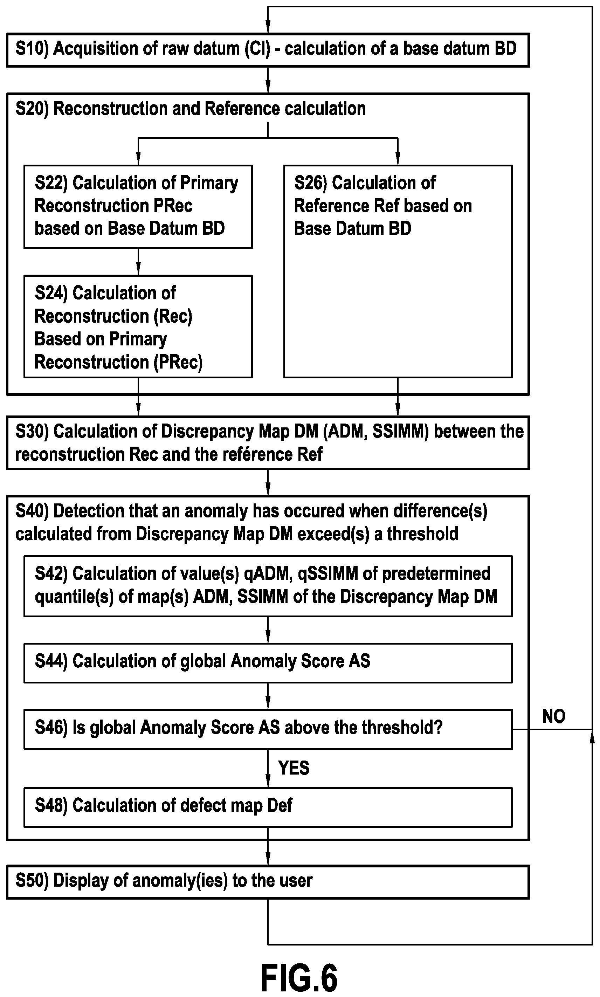

During exploitation, as shown on Fig.6, the anomaly detection method is performed iteratively by performing the following steps at successive loops, for successive values of an index i.

S10) Pre-processing

Camera image(s) CI acquired by camera 20 at step i are inputted to the pre-processing module PPM. Based on the inputted camera image(s) CI, the pre-processing module extracts sub-image(s), which are concatenated to obtain the base datum BD.

In the embodiment presented herein, two sub-image(s) SI1 and SI2 showing two region(s) of interest (two 'RoI's), referenced herein SI1 and SI2, where defects may occur, are first extracted from camera image CI (Fig.5A). The pre-processing module may then apply some functions to these sub-images. For instance in the present embodiment, the pre-processing module PPM resizes each one of sub-images SI1 and SI2 to obtain to pre-processed sub-images ppSI1 and ppSI2. These images for instance may have been resized a resolution of 256x256 pixels.

The outputted of the pre-processing module PPM is a base datum BD, constituted of the two sub-images ppSI1 and ppSI2. The base datum BD is transmitted in parallel to the generative model GM and to the second post-processing module PPM2. S20) Reconstruction and Reference calculation

At step S20, the reconstruction Rec and the Reference Ref used at the difference calculation step S30 are calculated (Fig.5B).

On one hand, the reconstruction Rec is calculated by performing step S22 followed, in some embodiments, by a step S24.

At step S22, the generative model GM processes the two sub-image(s) ppSI1 and ppSI2 (which constitute the base datum BD), and outputs a Primary Reconstruction PRec composed of two sub-images prec1 and prec2. The generative model GM is configured so that, if the base datum comprises no defects, the Primary Reconstruction PRec strongly resembles the Base Datum BD.

In embodiments in which step S24 is not performed, the reconstruction Rec is identical (equal) to the primary reconstruction PRec.

If step S24 is performed, as in the present embodiment, the first Post-Processing Module PPM1 applies a first post-processing on primary reconstruction PRec (sub-images prec1 and prec2), so as to obtain a reconstruction Rec. This post-processing is usually performed to smooth the primary reconstruction PRec, that is, to discard irrelevant detail information therefrom. For instance, in the present embodiment, the post-processing carried out at step S24 is only a blurring operation. Accordingly, the reconstruction Rec is a set of two blurred sub-images rec1 and rec2, outputted by the first Post-Processing Module PPM1 based on the primary reconstruction PRec.

In parallel, the reference Ref is obtained by performing step S26.

In embodiments in which step S26 is not performed, the reference Ref is identical (equal) to the Base Datum BD.

In the present embodiment, step S26 is performed: The second Post-Processing Module PPM2 applies a second post-processing on the Base Datum (sub-images ppSI1 and ppSI2), which yields the reference Ref. This post-processing may be performed to smooth the Base Datum, that is, to discard irrelevant detail information therefrom. The second post-processing may be or not identical to the first post-processing.

For instance, in the present embodiment, the second post-processing is a blurring operation. Accordingly, the reference Ref is a set of two blurred sub-images ref1 and ref2, outputted by the second Post-Processing Module PPM2 based on the base datum BD.

S30) Discrepancy Map calculation

The Reconstruction Rec and the Reference Ref are inputted into the comparison module CM, which calculates the discrepancy map DM.

In the embodiment presented herein, for each inputted pair of sub-images (first pair: rec1,ref1; second pair: rec2,ref2), the Discrepancy Map DM comprises two maps, an Absolute Difference Map ADM and an SSIM Map SSIM. The Absolute Difference Map ADM is based on the two absolute Absolute Difference Maps adm1,adm2 obtained for the two regions of interest (SI1, SI2), and the SSIM Map SSIM is based on the two SSIM maps ssim1,ssim2 obtained for the two region of interest (SI1, SI2).

S40) Calculation of Global Anomaly Score based on the Discrepancy Map

The Discrepancy Map DM is then used first to calculate a global anomaly score GAS, in order to determine whether there are defect(s).

The anomaly detection step S40 therefore comprises, for each region of interest (SI1, SI2):

S42) calculating respective pixel values (qADM1, qADM2 and qSSIM1, qSSIM2), called threshold values, for the pixel(s) corresponding to a predetermined quantile of the values, for the maps of the discrepancy map (adm1, adm2;ssim1,ssim2), for the region of interest considered;

S44) calculating a value of the per-region-of-interest Global Anomaly Score (GAS1 and GAS2) based on the calculated threshold values (qADM1,qADM2, qSSIM1,qSSIM2) for said predetermined quantile.

As an example, with respect to the Absolute Difference map (for instance: for the ADM map adm1 calculated for the first region of interest SI1), the predetermined quantile is set beforehand to 99%. In this case, it may be determined that 99% of the pixels of map adm1 have a value less or equal than 2.45. It is therefore determined that the threshold value qADM1 for the map adm1, for the considered region of interest SI1, is 2.45.

In the case where several regions of interest are considered, like regions SI1 and SI2 in the present exemplary embodiment, a global anomaly score GAS may be calculated based on the individual global anomaly scores calculated for the respective regions of interest. For instance, the global anomaly score GAS may be calculated as:

$$GAS = \lambda 1 * GAS1 + \lambda 2 * GAS2,$$

where $\lambda 1$ and $\lambda 2$ are chosen coefficients.

Then at a step S46, it is determined whether the global Anomaly Score AS is above a determined anomaly threshold.

If the global Anomaly Score is above that threshold, at a step S48 the defect map Def is calculated for the camera image CI, in order to determine the location of the defect(s) in that image.

S50) Issuance of anomaly detection message when global anomaly score exceeds threshold

If the global Anomaly Score is above the determined anomaly threshold, an anomaly detection message is issued.

This message can include either information relative to the detected anomalies or defects, and/or a control issued to trigger or effect an action in reaction to the detection of the anomalies or defects.

Accordingly, depending on the implementation, the anomaly detection message may be transmitted either to operator(s) tasked to check and exploit this information, and/or to a system configured to exploit this information (for instance, the operation system of shuttle 10, in the second embodiment).

The transmitted message may comprise the binary information 'presence or absence of anomaly', and possibly a number of identified anomaly(ies).

The transmitted message may also comprise the calculated defect map(s) Def. For instance, in the first embodiment, the defect map may be displayed to operators working on the manufacturing line, to inform them of the presence of defect(s) on the manufactured parts 30.

The displayed image can be based on the camera image(s) acquired by the camera. For instance, in each sub-image extracted by the pre-processing module PPM and showing a critical area of part 30, when a defect is detected on this area (and therefore, in this sub-image), the corresponding defect map may be overlayed on the sub-image, and the anomaly score for the sub-image may be indicated.

Several possibilities can be selected for the overlay to indicate the location of the identified defects: green/red, heat map based on SSIM values, etc.

If defect(s) are detected, further action(s) may be triggered, for instance a classification of the defect(s), etc., sending additional alarms, etc.

The algorithm then jumps back at step S10.

< Training >

During training, the Generative Model GM is trained to reconstruct 'good' data, that is, defect-free or anomaly-free data. The principle of the proposed method is to train the Generative Model GM only to reconstruct defect-free data. Consequently, the trained Generative Model GM normally remains unable to properly reconstruct a datum (a Base Datum) showing an anomaly. The differences, or reconstruction error, between the reconstruction and the reference (both derived from the Base Datum) can therefore be calculated at step S30, and can then be used at step S40 to detect the presence of defect(s) in the Base Datum and determine the location(s) thereof.

The Generative Model GM is trained using a loss function L in self-supervised fashion.

In this purpose, a training dataset is generated. The training dataset comprises a large number of Base Data (in the present embodiment: pairs of sub-images ppSI1 and ppSI2) outputted by the Pre-Processing Module PPM, each Base Datum being based on a defect-free raw datum.

During training, each Base Datum BD is passed through the generative model GM. The reconstruction error between the Primary Reconstruction PRec outputted by the Generative Model GM and the Base Datum is then evaluated using a loss function L.

The loss function L is essentially any loss function which expresses the difference(s) between the Reconstruction Rec outputted by the Reconstruction Module RM based on the Base Datum, and the Base Datum.

Preferably, the loss function L is a loss function which expresses the difference(s) between the Primary Reconstruction PRec and the Base Datum.

In the proposed embodiment, the loss function L is calculated as follows.

First, the absolute difference map ADM and the SSIM map SSIM, which together constitute the Discrepancy Map DM, are calculated.

In the present embodiment, the two regions of interest SI1 and SI2 are considered separately. For this reason, two per-RoI loss functions are calculated.

The explanation below is given for the first region of interest, but the same calculation is also executed for the second region of interest SI2.

**EP 4 375 920 B1**

The two maps adm1 and ssim1 are defined as for the Comparison Module CM; however for the training, instead of being calculated based on the Reconstruction and the Reference, they are calculated based on the Primary Reconstruction PRec and the Base Datum BD (more precisely, they are calculated based on sub-image prec1 of PRec and sub-image ref1 of BD).

Then, respective values μADM1 and μSSIM1 of the mean values of each of these two maps adm1 and ssim1 are calculated.

The RoI loss function L1 for the first region of interest SI1 between the Base Datum BD and the Primary Reconstruction PRec can then be calculated as:

$$L1(BD,PRec) = w\_adm * \mu ADM1 + w\_ssim * \mu SSIM1$$

where SSIM is the Structural Similarity Metric, and w_adm and w_ssim are weights that can be adjusted.

As an alternative, the loss function L (or the per-RoI loss functions when two or more Regions of Interest are considered) may also be based on a negative MSE loss (Mean Squared Error loss), and/or a perceptual loss (as defined by Ref.[3]), between the Base Datum BD and the Primary Reconstruction PRec.

Advantageously, the training dataset only comprises Base Data in which no defects are present.

However, the Base Data of the training dataset preferably include data which broadly cover the variety of situations in which the raw data may be acquired at step S10. If this requirement is met, after training the anomaly detection system ADS is robust to perturbations which may occur in the acquisition system. For instance in the second embodiment relative to an autonomous shuttle, the images constituting the training dataset should preferably cover a variety of lighting conditions, a variety of states of the floor inside the shuttle (clean, dirty; dry or wet; etc.).

By doing so, the anomaly detection system ADS may become robust to changes in the lighting, to movements of the camera, to the extent that similar perturbations are represented in the training dataset. For instance, with respect to positioning accuracy of the camera, if movement of the camera is +/- x mm and such perturbations are present in the training dataset (possibly, by using augmentations), the detection system ADS will be robust. Conversely, previously unseen perturbations, for instance movements of the camera of more than a certain threshold, will trigger the detection of an anomaly.

For this reason, the training dataset may preferably include augmentations, which reduces the total number of data needed to achieve rotational and translational robustness. The augmentations are selected as augmentations which correspond to the robustness that is expected from the system (eg, rotational and translational robustness, robustness vis-à-vis lighting changes, etc.).

Besides, advantageously the Base Data contained in the training dataset do not need to be registered.

It should be noted that since the training is performed on the generative module GM itself, without including the post-processing module(s) PPM1 (or PPM2), the loss function is calculated based on the Primary Prediction (without blurring), not on the Prediction itself. Indeed, the blurring operation takes away part of the information.

Conversely, during inference, both post-processing modules PPM1 and PPM2 are used, which process respectively the Primary Reconstruction PRec and the Base Datum BD so as to obtain the Reconstruction Rec and the Reference Ref. Indeed, experience has shown that blurring both images improves the performance of the anomaly detection method. It removes indeed from the Primary Reconstruction and/or from the Base Datum BD information which would otherwise reduce, rather than improve, the performance of the Comparison Module CM and finally of the Anomaly Detection module AD.

After training, the performance of the trained Generative Model GM can be evaluated as follows.

In the case where the only available raw data do not show any defect(s), it may be difficult to assess whether the system is properly trained.

In this case, a test database can be generated which includes test images, which are based on defect-free base Data, modified so as to show defect(s). Such test images can be obtained by adding artefacts in otherwise defect-free raw data.

The performance of the system can then be assessed based on this test database before actual deployment of the ADS.

It is intended that the specification and examples be considered as exemplary only, with a true scope of the disclosure being indicated by the following claims.

**Claims**

**1.** An anomaly score determination method comprising

14

S20) based on a base datum (BD), calculating a reconstruction (Rec) and a reference (Ref), the base datum (BD) representing a scene including part or all of one or more objects, the reconstruction (Rec) being calculated with a reconstruction module (RM), the reference (Ref) being extracted from the base datum (BD);

S30) calculating a Discrepancy Map (DM) representative of differences between the reconstruction (Rec) and the reference (Ref);

S40) calculating a global anomaly score (GAS) based on the Discrepancy Map (DM);

the reconstruction module (RM) being configured to calculate reconstructions (Rec) such that, in the absence of anomaly(ies) in a base datum, the reconstruction (Rec) calculated based on the base datum (BD) strongly resembles to the reference (Ref) extracted from the base datum (BD),

**characterized in that** step S40 comprises:

S42) calculating pixel value(s) (qADM;qSSIM) at predetermined quantile(s) in map(s) of the Discrepancy Map (ADM;SSIM);

S44) calculating a value of the Anomaly Score (AS) based on said calculated pixel value(s) (qADM;qSSIM) at said predetermined quantile(s).

2. The anomaly score determination method of claim 1, wherein the scene includes a free space provided next to an object, the free space being a space normally containing no object, and at step S30, the differences include differences caused by the presence of one or more objects in said free space.

3. The anomaly score determination method of claim 1, wherein the reconstruction module (RM) is configured to output a reconstruction (Rec) which, when the object(s) or the part(s) of the object(s) present in the scene have no defect, is substantially identical to the reference (Ref).

4. The anomaly score determination method according to any one of claims 1 to 3, wherein the base datum (BD) comprises base image(s);
the Reconstruction (Rec) is calculated using a computer-implemented Generative Model (GM) configured, in order to calculate the reconstruction (Rec), to encode the Base Datum (BD) as a latent feature having a smaller resolution than the base image(s), and to calculate the reconstruction (Rec) based on the latent feature.

5. The anomaly score determination method according to any one of claims 1 to 4, wherein the Discrepancy Map calculated at step S30 comprises at least one of an Absolute Difference Map (ADM) and an SSIM Map (SSIM), wherein the Absolute Difference Map (ADM) and the SSIM Map (SSIM) comprise respectively, for each pixel (i,j), the values:

$$ADM(i,j) = |\ Rec(i,j) - Ref(i,j)\ |$$

and

$$SSIM(Rec,Ref)(i,j) = SSIM(Rec(i,j),\ Ref(i,j))$$

where Rec(i,j) and Ref(i,j) are the values of pixel (i,j) respectively of the Reconstruction Rec and of Reference Ref, and SSIM is the Structural Similarity Metric.

6. The anomaly score determination method according to any one of claims 1 to 5, wherein step S20 of calculating the reconstruction (Rec) and the reference (Ref) comprises:

S22) by passing the Base Datum (BD) through a Generative Module (GM), calculating a primary reconstruction (PRec) based on the base datum (BD);

S24) applying a first post-processing to the primary reconstruction (PRec) to yield the reconstruction (Rec), wherein the first post-processing includes at least one of a blurring operation and a masking operation.

7. The anomaly score determination method according to any one of claims 1 to 6, wherein step S20 of calculating the reconstruction (Rec) and the reference (Ref) comprises a step S26:

S26) applying a second post-processing on the Base Datum (BD) to yield the Reference (Ref), wherein the second post-processing includes at least one of a blurring operation and a masking operation.

8. The anomaly score determination method according to any one of claims 1 to 7, comprising a step S10 of acquiring raw data, and applying a masking operation on the raw data to obtain the base datum (BD).

9. One or more computer program(s) comprising instructions which, when the instructions are executed by one or more processor(s), cause the one or more processor(s) to carry out the steps of an anomaly score determination method according to any one of claims 1 to 8.

10. A non-transitory computer readable medium, having the one or more computer program(s) according to claim 9 stored thereon.

11. A system (ADS) comprising a computer-readable medium (11) according to claim 10 and one or more processors (12) configured, to execute said one or more computer program(s).

**Patentansprüche**

1. Anomaliepunktzahl-Bestimmungsverfahren, umfassend

S20) basierend auf einem Basisbezugspunkt (BD), Berechnen einer Rekonstruktion (Rec) und einer Referenz (Ref), wobei der Basisbezugspunkt (BD) eine Szene darstellt, die einen Teil oder alle von einem oder mehreren Objekten beinhaltet, wobei die Rekonstruktion (Rec) mit einem Rekonstruktionsmodul (RM) berechnet, die Referenz (Ref) aus dem Basisbezugspunkt (BD) extrahiert wird;
S30) Berechnen einer Diskrepanzkarte (DM), die repräsentativ für Unterschiede zwischen der Rekonstruktion (Rec) und der Referenz (Ref) ist;
S40) Berechnen einer globalen Anomaliepunktzahl (GAS) basierend auf der Diskrepanzkarte (DM);
wobei das Rekonstruktionsmodul (RM) konfiguriert ist, dass Rekonstruktionen (Rec) zu berechnen, sodass bei Abwesenheit von Anomalie(n) in einem Basisbezugspunkt (BD) die Rekonstruktion (Rec), die basierend auf dem Basisbezugspunkt (BD) berechnet wird, stark der aus dem Basisbezugspunkt (BD) extrahierten Referenz (Ref) ähnelt,
**dadurch gekennzeichnet, dass** Schritt S40 Folgendes umfasst:

S42) Berechnen von Pixelwerten (qADM;qSSIM) bei vorbestimmten Quantilen in der/den Karte(n) der Diskrepanzkarte (ADM;SSIM);
S44) Berechnen eines Werts der Anomaliepunktzahl (AS) basierend auf dem/den berechneten Pixelwert-(en) (qADM; qSSIM) bei dem/den vorbestimmten Quantil(en).

2. Anomaliepunktzahl-Bestimmungsverfahren nach Anspruch 1, wobei die Szene einen freien Raum beinhaltet, der neben einem Objekt bereitgestellt ist, wobei der freie Raum ein Raum ist, der normalerweise kein Objekt enthält, und in Schritt S30 die Unterschiede Unterschiede beinhalten, die durch das Vorhandensein eines oder mehrerer Objekte in dem freien Raum verursacht werden.

3. Anomaliepunktzahl-Bestimmungsverfahren nach Anspruch 1, wobei das Rekonstruktionsmodul (RM) konfiguriert ist, um eine Rekonstruktion (Rec) auszugeben, die im Wesentlichen mit der Referenz (Ref) identisch ist, wenn das/die Objekt(e) oder der/die Teil(e) des/der in der Szene vorhandenen Objekts/Objekte keinen Fehler aufweisen.

4. Anomaliepunktzahl-Bestimmungsverfahren nach einem der Ansprüche 1 bis 3, wobei der Basisbezugspunkt (BD) Basisbild(er) umfasst;
die Rekonstruktion (Rec) unter Verwendung eines rechnerimplementierten generativen Modells (GM) berechnet wird, das konfiguriert ist, um die Rekonstruktion (Rec) zu berechnen, um den Basisbezugspunkt (BD) als latentes Merkmal zu kodieren, das eine geringere Auflösung als das/die Basisbild(er) aufweist, und um die Rekonstruktion (Rec) basierend auf dem latenten Merkmal zu berechnen.

5. Anomaliepunktzahl-Bestimmungsverfahren nach einem der Ansprüche 1 bis 4, wobei die in Schritt S30 berechnete Diskrepanzkarte mindestens eine Karte aus einer Karte der absoluten Differenz (ADM) und einer SSIM-Karte (SSIM) umfasst, wobei die Karte der absoluten Differenz (ADM) und die SSIM-Karte (SSIM) jeweils für jedes Pixel (i, j) folgende Werte umfassen:

$$ADM(i,j) = \left| Rec(i,j) - Ref(i,j) \right|$$

und

$$SSIM(Rec,Ref)(i,j) = SSIM(Rec(i,j), Ref(i,j))$$

wobei Rec(i,j) und Ref(i,j) jeweils die Werte von Pixeln (i,j) der Rekonstruktion Rec und Referenz Ref sind und SSIM die strukturelle Ähnlichkeitsmetrik ist.

6. Anomaliepunktzahl-Bestimmungsverfahren nach einem der Ansprüche 1 bis 5, wobei Schritt S20 eines Berechnens der Rekonstruktion (Rec) und der Referenz (Ref) Folgendes umfasst:

S22) durch Leiten des Basisbezugspunkts (BD) durch ein generatives Modul (GM), Berechnen einer primären Rekonstruktion (PRec) basierend auf dem Basisbezugspunkt (BD);
S24) Anwenden einer ersten Nachbearbeitung auf die primäre Rekonstruktion (PRec), um die Rekonstruktion (Rec) zu ergeben, wobei die erste Nachbearbeitung mindestens eines von einem Verwischungsvorgang und/oder einen Maskierungsvorgang beinhaltet.

7. Anomaliepunktzahl-Bestimmungsverfahren nach einem der Ansprüche 1 bis 6, wobei Schritt S20 eines Berechnens der Rekonstruktion (Rec) und der Referenz (Ref) einen Schritt S26 umfasst:
S26) Anwenden einer zweiten Nachbearbeitung auf Basisbezugspunkt (BD), um die Referenz (Ref) zu ergeben, wobei die zweite Nachbearbeitung mindestens eines von einem Verwischungsvorgang und/oder einen Maskierungsvorgang beinhaltet.

8. Anomaliepunktzahl-Bestimmungsverfahren nach einem der Ansprüche 1 bis 7, umfassend einen Schritt S10 eines Erfassens von Rohdaten und die Anwenden eines Maskierungsvorgangs auf die Rohdaten, um den Basisbezugspunkt (BD) zu erlangen.

9. Ein oder mehrere Rechnerprogramme, umfassend Anweisungen, die, wenn die Anweisungen von einem oder mehreren Prozessoren ausgeführt werden, den einen oder die mehreren Prozessoren veranlassen, die Schritte eines Anomaliepunktzahl-Bestimmungsverfahrens nach einem der Ansprüche 1 bis 8 durchzuführen.

10. Nicht-transitorisches rechnerlesbares Medium, auf dem das eine oder die mehreren Rechnerprogramme nach Anspruch 9 gespeichert sind.

11. System (ADS), umfassend ein rechnerlesbares Medium (11) nach Anspruch 10 und einen oder mehrere Prozessoren (12), die konfiguriert sind, um das eine oder die mehreren Rechnerprogramme auszuführen.

**Revendications**

1. Procédé de détermination de score d'anomalie comprenant

S20) sur la base d'une donnée de base (BD), le calcul d'une reconstruction (Rec) et d'une référence (Ref), la donnée de base (BD) représentant une scène comprenant une partie ou la totalité de un ou plusieurs objets, la reconstruction (Rec) étant calculée avec un module de reconstruction (RM), la référence (Ref) étant extraite de la donnée de base (BD) ;
S30) le calcul d'une carte de divergence (DM) représentative de différences entre la reconstruction (Rec) et la référence (Ref) ;
S40) le calcul d'un score d'anomalie global (GAS) sur la base de la carte de divergence (DM) ;
le module de reconstruction (RM) étant configuré pour calculer des reconstructions (Rec) de telle sorte que, en l'absence d'anomalie(s) dans une donnée de base, la reconstruction (Rec) calculée sur la base de la donnée de base (BD) ressemble fortement à la référence (Ref) extraite de la donnée de base (BD),
**caractérisé en ce que** l'étape S40 comprend :

S42) le calcul d'une ou de valeurs de pixels (qADM ; qSSIM) à un ou des quantiles prédéterminés dans la ou les cartes de la carte de divergence (ADM ; SSIM) ;

S44) le calcul d'une valeur du score d'anomalie (AS) sur la base de la ou desdites valeurs de pixels calculées (qADM ; qSSIM) à ou auxdits quantiles prédéterminés.

2.  Procédé de détermination de score d'anomalie selon la revendication 1, selon lequel la scène comprend un espace libre prévu à côté d'un objet, l'espace libre étant un espace ne contenant normalement aucun objet, et à l'étape S30, les différences comprennent des différences provoquées par la présence d'un ou plusieurs objets dans ledit espace libre.

3.  Procédé de détermination de score d'anomalie selon la revendication 1, selon lequel le module de reconstruction (RM) est configuré pour délivrer une reconstruction (Rec) qui, quand le ou les objets ou la ou les parties du ou des objets présents dans la scène n'ont aucun défaut, est essentiellement identique à la référence (Ref).

4.  Procédé de détermination de score d'anomalie selon l'une quelconque des revendications 1 à 3, selon lequel la donnée de base (BD) comprend une ou des images de base ;
    la reconstruction (Rec) est calculée en utilisant un modèle génératif mis en œuvre par ordinateur (GM) configuré, afin de calculer la reconstruction (Rec), pour encoder la donnée de base (BD) comme caractéristique latente ayant une résolution plus petite que la ou les images de base, et pour calculer la reconstruction (Rec) sur la base de la caractéristique latente.

5.  Procédé de détermination de score d'anomalie selon l'une quelconque des revendications 1 à 4, selon lequel la carte de divergence calculée à l'étape S30 comprend au moins une d'une carte de différence absolue (ADM) et d'une carte SSIM (SSIM), la carte de différence absolue (ADM) et la carte SSIM (SSIM) comprenant de manière respective, pour chaque pixel (i, j), les valeurs :

$$\mathrm{ADM(i,j)} = \big|\mathrm{Rec(i,j)} - \mathrm{Ref(i,j)}\big|$$

et

$$\mathrm{SSIM(Rec,Ref)(i,j)} = \mathrm{SSIM(Rec(i,j),\ Ref(i,j))}$$

où Rec(i,j) et Ref(i,j) sont les valeurs de pixel (i,j) respectivement de la reconstruction Rec et de la référence Ref, et SSIM est la mesure de similitude structurelle.

6.  Procédé de détermination de score d'anomalie selon l'une quelconque des revendications 1 à 5, selon lequel l'étape S20 de calcul de la reconstruction (Rec) et de la référence (Ref) comprend :

    S22) en faisant passer la donnée de base (BD) par un module génératif (GM), le calcul d'une reconstruction primaire (PRec) sur la base de la donnée de base (BD) ;
    S24) l'application d'un premier post-traitement sur la reconstruction primaire (PRec) pour produire la reconstruction (Rec), le premier post-traitement comprenant au moins une d'une opération de floutage et d'une opération de masquage.

7.  Procédé de détermination de score d'anomalie selon l'une quelconque des revendications 1 à 6, selon lequel l'étape S20 de calcul de la reconstruction (Rec) et de la référence (Ref) comprend une étape S26 :
    S26) l'application d'un deuxième post-traitement sur la donnée de base (BD) pour produire la référence (Ref), le deuxième post-traitement comprenant au moins une d'une opération de floutage et d'une opération de masquage.

8.  Procédé de détermination de score d'anomalie selon l'une quelconque des revendications 1 à 7, comprenant une étape S10 d'acquisition de données brutes, et d'application d'une opération de masquage sur les données brutes pour obtenir la donnée de base (BD).

9.  Un ou plusieurs programmes informatiques comprenant des instructions qui, quand les instructions sont exécutées par un ou plusieurs processeurs, amènent les un ou plusieurs processeurs à mettre en œuvre les étapes d'un procédé de détermination de score d'anomalie selon l'une quelconque des revendications 1 à 8.

10. Support lisible par ordinateur non-transitoire, ayant les un ou plusieurs programmes informatiques selon la revendication 9 stockés dessus.

11. Système (ADS) comprenant un support lisible par ordinateur (11) selon la revendication 10 et un ou plusieurs processeurs (12) configurés pour exécuter lesdits un ou plusieurs programmes informatiques.

# FIG.1

**FIG.2**

**FIG.3**

FIG.4

SI1

ppSI1

ppSI2

CI

SI2

BD

**FIG.5A**

EP 4 375 920 B1

FIG.5B

EP 4 375 920 B1

S10) Acquisition of raw datum (CI) - calculation of a base datum BD

S20) Reconstruction and Reference calculation

> S22) Calculation of Primary Reconstruction PRec based on Base Datum BD
>
> S24) Calculation of Reconstruction (Rec) Based on Primary Reconstruction (PRec)
>
> S26) Calculation of Reference Ref based on Base Datum BD

S30) Calculation of Discrepancy Map DM (ADM, SSIMM) between the reconstruction Rec and the référence Ref

S40) Detection that an anomaly has occured when difference(s) calculated from Discrepancy Map DM exceed(s) a threshold

> S42) Calculation of value(s) qADM, qSSIMM of predetermined quantile(s) of map(s) ADM, SSIMM of the Discrepancy Map DM
>
> S44) Calculation of global Anomaly Score AS
>
> S46) Is global Anomaly Score AS above the threshold?

NO

YES

> S48) Calculation of defect map Def

S50) Display of anomaly(ies) to the user

## FIG.6

A1) perform steps S22, S30 and S40, based on defect-free base data to obtain a first set of calculated values GAS

B) determine the determined anomaly threshold based on said first set of calculated values (GAS) of the global anomaly threshold or based on a distribution thereof

**FIG.7A**

A1) perform steps S22, S30 and S40, based on defect-free base data to obtain a first set of calculated values GAS

A2) perform steps S22, S30 and S40, based on defect-showing base data obtain a second set of calculated values GAS

B) determine the determined anomaly threshold based on difference(s) between said first set of calculated values and said second set of calculated values, or based on differences between a distribution of said first set of calculated values and a distribution of said second set of calculated values

**FIG.7B**

A1) perform steps S22, S30 and S40, based on defect-free base data to obtain a first step of calculated values GAS

A2) perform steps S22, S30 and S40, based on defect-showing base data to obtain a second set of calculated values GAS

C) based on the values of the first set and the second set of calculated values relative to the determined threshold, establish a ROC curve showing a performance for detecting anomalies of the anomaly detection method, as a function of the determined anomaly threshold

D) determine the value of the determined anomaly threshold based on the ROC curve

**FIG.7C**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG, ZHOU et al.** Image quality assessment: from error visibility to structural similarity.. *IEEE transactions on image processing*, 2004, vol. 13 (4), 600-612
- **MISRA, D.** Mish: A Self Regularized Non-Monotonic Neural Activation Function. *ArXiv, abs/1908.08681*, 2019
- Perceptual losses for real-time style transfer and super-resolution. **JOHNSON, J.** ; **ALAHI, A.** ; **FEI-FEI, L.** European conference on computer vision. Springer, October 2016, 694-711

- **SAEEDI, JAMAL et al.** Anomaly Detection for Industrial Inspection using Convolutional Autoencoder and Deep Feature-based One-class classification. *Proceedings of the 17th International Joint Conference on computer vision, imaging and computer graphics theory and applications*, 06 February 2022, ISBN 978-989-7585-55-5, 85-96